# EUROPEAN PATENT APPLICATION

(11) **EP 2 400 384 A1**
(43) Date of publication of application: **28.12.2011**
(21) Application number: 09840333.0
(22) Date of filing: 19.02.2009
(51) Int. Cl.: G06F 9/44, G06F 21/22, G06F 21/24

(54) **APPLICATION DEVELOPMENT SUPPORTING DEVICE, PROGRAM, AND RECORDING MEDIUM**

(71) Applicant: The Bank of Tokyo-Mitsubishi UFJ, Ltd., Chiyoda-ku Tokyo 100-8388 (JP)
(72) Inventor: HATTORI, Takahisa, Tokyo 103-0027 (JP); CHINUKI, Motonari, Tokyo 103-0027 (JP); TAKEUCHI, Tatsuki, Tokyo 111-0043 (JP)
(74) Representative: Klunker . Schmitt-Nilson . Hirsch
(86) International application number: PCT/JP2009/052836
(87) International publication number: WO 2010/095226

(57) **Abstract**

A development of an application program which has a user interface capable of instructing to upload and download a file and executes a previously designated service from plural types of service is realized without executing a coding work.

A program, which transmits also a web service call address and a service name, is added to an upload component disposed in a file upload screen. A file which is instructed to be uploaded via the component is added with the call address and the service name and registered in a DB, and when a downloading is instructed from a client terminal, a corresponding web service (for example, a service for determining an access right) is executed based on the call address and the service name, and the instructed file is transferred to the terminal only if a result is OK.

## Description

### Technical Field

The present invention relates to an application development support device, a program, and a recording medium, and more specifically to an application development support device for supporting a development of an application program which is executed using a tool which creates a program for realizing a user interface when the user interface to be constructed is defined, an application development support program for causing a computer to function as the application development support device, and a recording medium at which the application development support program is recorded.

### Background Art

Recently, JSF (Java (Registered Trademark) Server Faces) is known as a standard for constructing a user interface for a web application. With JSF, it is possible to design a user interface screen and to construct a user interface such as a definition of a transition of a user interface screen by performing an operation for selecting a desired symbol from plural types of symbols, which may be used as components of the user interface screen, and disposing the selected symbol, and a tool, which may automatically create a program which realizes the constructed user interface, is prepared, and by using the tool, a program, which realizes a desired user interface may be obtained easily in a short time without performing coding work. Therefore, in the development of a web application, if a program of a user interface portion in the web application is automatically created using the tool of JSF, it is expected to greatly reduce the development period because coding work is not necessary in user interface portions.

Incidentally, in web applications, "an upload" which transfers a file designated as a file to be uploaded to a DB (database) server and the like and stores the file in the server and the like and "a download" which obtains a file designated as a file to be downloaded from the DB server and the like are extensively implemented and ordinary functions. Among these functions, in a download of a file, a file to be downloaded is designated by address information (for example, a URL (Uniform Resource Locator)) of the file which is established by uploading of the file. However, even if a file stored in the DB server or the like is a confidential file, if the address information of the file is leaked to a third party, the file is downloaded by requesting a download of the file by inputting the address information obtained by the third party.
Thus, it is necessary to prevent downloading of a file which is executed by a user who does not have a right, by ascertaining whether or not the user who requests downloading of the file has a right to download the file to be downloaded when downloading of the file is requested.

In relation to the above, Japanese Patent Application Laid-Open (JP-A) No. 2006-318203 discloses a technology, in a system in which plural services provided by carriers are aggregated on one computer, which restricts JSP (Java Server Pages) grammars used for customization, confirms a right of a user before operation, and configures a tag library so as to separately manage a name space of an object to be accessed according to a type of a user, and confirms that a JSP file is described according to a planned rule, and thereby secures security between carriers.

Further, JP-A No. 2003-162449 discloses a technology, in a case in which a resource of a destination of access is designated by URI (URL) format, which prepares an integrated management access control list which has a name space which uniquely designates plural information resources by element names and in which respective access rights of the plural information resources are set as access rights of element names, and, when access is requested to the information resource, the range of the access is determined by referring to the access rights of the element names corresponding to the information resources in the integrated management access control list, and the respective access rights to the plural information resources are managed based on the result of the determination.

Further, JP-A No. 2003-44297 discloses a technology which captures an operation request to a computer resource managed by an OS such as a file or the like from a processing or an OS before the computer resource is accessed, which determines whether or not an access right exists to the computer resource designated by the captured operation request, delivers the computer resource to the OS as per the request and returns the result to a request source processing if an access right exists, and rejects the operation request or permits the operation request by charging a fee depending on the content of the computer resource if an access right does not exist.

### DISCLOSURE OF INVENTION

### Technical Problem

As described above, a program of a user interface portion in a web application may be developed using a tool of JSF without carrying out coding work. Therefore, if a program which executes an upload processing and a download processing of a file is developed as a program or a servlet of a web service (a program configured as a part that is executed on a web server) and the program is provided to a developer of a web application as a standard function that may be used by the developed web application, coding work may be omitted when a web application capable of instructing uploading and downloading of a file is developed.

However, if development is requested of a web application for selectively executing any web service of plural types of web services, for example, a check of rights or the like as described above when downloading of a file is requested, a problem arises in that a developer needs to perform coding work because it becomes necessary for the developer to carry out modification (customization) by, for example, adding a function for selecting whether any web service of plural types of web services is executed when a servlet or the like which executes a download processing is requested to download a file, providing plural servlets or the like corresponding to plural types of web services so that a corresponding servlet starts when a download is requested, or the like.

On the contrary, none of the technologies disclosed in JP-A Nos. 2006-318203, 2003-162449 and 2003-44297 considers omission of coding work although each of the technologies confirms rights. Accordingly, even if these technologies are applied, if an application is developed which has a user interface capable of instructing uploading and downloading of a file and selectively executes a web service when a file is downloaded, it is necessary to perform coding work. When coding work is required in any way in development of a program, a problem arises in that the development period is greatly increased in comparison with a case in which coding work may be omitted because a person in charge of the development is limited to a person having knowledge of a programming language and debugging work is necessary for programs created by coding.

The present invention is made in consideration of these circumstances, and an object of the invention is to obtain an application development support device, an application development support program, and a recording medium which may realize the development of an application program having a user interface capable of instructing uploading and downloading of a file and that executes a previously designated service from plural types of services when a file is downloaded in response to an instruction, without performing coding. Solution to Problem

To achieve the above object, an application development support device according to a first aspect of the present invention is an application development support device that supports development of an application program including a first program by using a first tool which displays, at a display screen, a plurality of types of symbols which are capable of being used as components of a user interface screen, and generates the first program, which is for realizing a user interface using a computer when the user interface to be constructed is defined by at least executing a first operation for designing the user interface screen whereby a developer disposes a desired symbol of the plurality of types of symbols at a desired position in a screen, the application development support device includes: an upload execution unit that, if a file to be uploaded is transferred together with additional information during operation, registers the file to be uploaded and the additional information in a first storage unit in association with each other; a program addition unit that, when instructed to upload a given file via a symbol during operation, the symbol being a symbol for instructing uploading of a file and being disposed in a specific user interface screen by execution of the first operation with respect to the first tool by the developer, adds a program which causes a computer to execute a processing which transfers the file to be uploaded to the upload execution unit and which transfers service specifying information for specifying a service to the upload execution unit as the additional information, the service being designated by the developer when the first operation is executed and being executed when the file to be uploaded is downloaded; a service providing unit that executes a service provision processing which provides a service requested from a plurality of types of services during operation; and a download execution unit that, when instructed to download a file during operation, reads the file to be downloaded from the first storage unit, and, if the service specifying information is registered in the first storage unit in association with the file to be downloaded, returns a response to a download instruction source after the download execution unit requests provision of the service specified by the service specifying information.

In the first aspect of the invention, a first tool displays plural types of symbols, which is capable of being used as components of a user interface screen, on a display screen and generates a first program for realizing a user interface when a user interface to be constructed is defined by executing at least a first operation for designing a user interface screen by disposing a desired symbol of the plural types of symbols at a desired position in the screen by a developer. Note that, as described in, for example, a seventh aspect, a tool based on JSF may be applied as the first tool. In the first aspect of the invention, the development of the application program including the first program is performed by a developer using the first tool.

The first aspect of the invention is provided with an upload execution unit that registers a file to be uploaded and additional information in a first storage unit in association with each other if the file to be uploaded is transferred together with the additional information during operation (when the application program including the first program is executed by a computer), and, during operation, if uploading of an given file is instructed via a symbol which is a symbol for instructing uploading of a file and which is disposed in a specific user interface screen by performing the first operation to the first tool by the developer, a program addition unit adds a program which causes a computer to execute a processing which transfers the file to be uploaded to the upload execution unit and which transfers service specifying information for specifying a service, which is designated by the developer when the first operation is executed and is executed when the file to be uploaded is downloaded, to the upload execution unit as the additional information.

Further, the first aspect of the invention is provided with a service providing unit that executes a service provision processing which provides a requested service of plural types of services during operation, and, during operation, if downloading of a file is instructed, a download execution unit reads a file to be downloaded from the first storage unit, and, if the service specifying information is registered in the first storage unit in association with the file to be downloaded, the download execution unit returns a response to a download instruction source after the download execution unit requests to provide a service specified by the service specifying information.

With the above configuration, when the operation which disposes a symbol for instructing to upload a file in a specific user interface screen is executed to the first tool as the first operation, an operation which designates service specifying information for specifying a service to be executed when a file, which has been uploaded in response to an instruction via the symbol disposed in the specific user interface screen during operation, is downloaded is executed, if uploading of an given file is instructed via the symbol in the specific user interface screen during operation, a program added to the symbol is executed by a computer, and whereby, the file to be uploaded and the service specifying information are transferred to the upload execution unit and registered in association with each other in the first storage unit by the upload execution unit.

Further, if downloading of the above-mentioned upload file during operation is instructed, the file to be downloaded is read from the first storage unit by the download execution unit and the service specifying information is registered in the first storage unit in association with the file to be downloaded, and thus, the service providing unit is requested to provide a service specified by the service specifying information and a service provision processing for providing the requested service of the plural types of services is executed by the service providing unit and a response is returned from a download execution unit to a download instruction source.

Since, as described above, any of the upload execution unit, the program addition unit, and the download execution unit according to the first aspect of the invention is configured to execute a predetermined processing, a program which realizes these units may be previously developed, and a program, which functions as the program addition unit, may be provided as a program which may be available when the developer designs a user interface screen using the first tool, the upload execution unit and the download execution unit may be provided as programs which may be available when the application program developed by the developer is executed (is operated), and it is not necessary modify (customize) the programs by the developer. Further, there is a possibility that the service provision processing executed by the service providing unit according to the first aspect of the invention is different depending on the application program, however, if a program, which functions as the service providing unit, already exists, the program may be used, and if a tool, which may automatically create a program based on a standard (for example, BPEL: Business Processing Execution Language) which may describe a business processing as a workflow, is used, a program which functions as the service providing unit may be obtained without executing the coding job.

Therefore, according to the first aspect of the invention, when the developer performs an operation for disposing a symbol for instructing to upload a file in the specific user interface screen, since the developer may develop the application program which has a user interface capable of instructing to upload and download a file and executes the previously set service of the plural types of services when a file is downloaded in response to an instruction only by executing an operation which designates the service specifying information, the development of the application program may be realized without performing a coding work.

Note that, in the first aspect of the invention, the file to be downloaded that is read by the download execution unit from the first storage unit may be uniformly transferred to the download instruction source, however, as described in, for example, a second aspect of the invention, the download execution unit may be configured such that, depending on contents and the like of the service provided by the service provision processing executed by the service providing unit, the file to be downloaded that is read from the first storage unit may be selectively transferred to the download instruction source according to a result of processing of the service provision processing after the service provision processing executed by the service providing unit is completed.

Further, in the first aspect of the invention, any given service (for example, a service which counts a number of times of downloading in a unit of file or in a unit of user, and the like) may be applied as the service provided by the service provision processing executed by the service providing unit, however, as described in, for example a third aspect, the service providing unit may be configured such that when user specifying information for specifying a user who has instructed at least downloading a file is transferred from a service request source, the service providing unit may determine whether or not the user has a right for accessing the file based on at least the transferred user specifying information and may notify the service request source of a result of determination.

In the first aspect of the invention, the service providing unit may provide the plural types of services, however, the right determination service of the third aspect may be any one of the plural types of services, plural types of right determination services whose contents of determination are different from each other may be included in the plural types of services, or all the plural types of services may be right determination services whose contents of determination are different from each other. Further, the right determination service may be configured such that file specifying information for specifying a file whose downloading is instructed is also transferred in addition to the user specifying information and the access right is determined using also the file specifying information.

Further, as described in the third aspect, if the service providing unit provides the right determination service, the download execution unit is preferably configured as described in, for example, a fourth aspect such that the download execution unit transfers at least the user specifying information to the service providing unit and requests to provide the right determination service, and if a result of determination notified from the service providing unit is that the user has the access right, the download execution unit transfers the file to be downloaded that is read from the first storage unit to the download instruction source, and if the result of determination notified from the service providing unit is that the user does not have the access right, the download execution unit transfers an error response to the download instruction source. Thus, even if information (for example, URL and the like) for calling the download execution unit and instructing to download a file, is leaked to a user who does not have a right for accessing the file, if the user instructs downloading of the file, since it is notified from the service providing unit that the user does not have the right as a determination result, the error response is returned to (the download instruction source such as a terminal and the like operated by) the user and the downloading of the file is blocked. As a result, security of the file may be secured.

Further, in the invention of any of the first aspect to the fourth aspect, if a file and the additional information are registered in the first storage unit by the upload execution unit as described in, for example, a fifth aspect, it is preferable to provide a screen creation unit that additionally creates a download user interface screen including a link, in which information for calling the download execution unit and instructing downloading of the file is embedded, as one screens constituting the user interface. Thus, downloading of the file may be instructed only by executing an operation which selects the link of the download user interface screen created by the screen creation unit during operation, and an operation for instructing downloading of a file may be simplified.

Further, in any of the inventions of the first aspect to the fifth aspect, the service specifying information may be configured such that the service specifying information includes end point information for calling the service providing unit, which may provide a service to be executed when the file to be uploaded is downloaded, and a service name of the service to be executed and the download execution unit requests the service providing unit to provide a service specified by the service specifying information by calling the service providing unit according to the end point information included in the service specifying information and delivering the service name included in the service specifying information to the called service providing unit as an argument as described in, for example, a sixth aspect.

An application development support program according to a eighth aspect of the invention is an application development support program for causing a computer to function as an application development support device that supports development of an application program including a first program by using a first tool which displays, at a display screen, a plurality of types of symbols which are capable of being used as components of a user interface screen, and generates the first program, which is for realizing a user interface using a computer when the user interface to be constructed is defined by at least executing a first operation for designing the user interface screen whereby a developer disposes a desired symbol of the plurality of types of symbols at a desired position in a screen, wherein: the application development support program causes a second computer to function as an upload execution unit that, if a file to be uploaded is transferred together with additional information during operation, registers the file to be uploaded and the additional information in a first storage unit in association with each other; the application development support program causes a first computer, at which at least the first tool operates, to function as a program addition unit that, when instructed to upload a given file via a symbol during operation, the symbol being a symbol for instructing uploading of a file and being disposed in a specific user interface screen by execution of the first operation with respect to the first tool by the developer, adds a program which causes a computer to execute a processing which transfers the file to be uploaded to the upload execution unit and which transfers service specifying information for specifying a service to the upload execution unit as the additional information, the service being designated by the developer when the first operation is executed and being executed when the file to be uploaded is downloaded; and the application development support program further causes the second computer to function as a service providing unit that executes a service provision processing which provides a service requested from a plurality of types of services during operation, and the application development support program further causes the second computer to function as a download execution unit that, when instructed to download a file during operation, reads the file to be downloaded from the first storage unit, and, if the service specifying information is registered in the first storage unit in association with the file to be downloaded, returns a response to a download instruction source after the download execution unit requests provision of the service specified by the service specifying information.

Since the application development support program according to the eighth aspect of the invention is the program which causes the first computer at which at least the first tool operates to function as the program addition unit and causes the second computer which executes at least the first program to function as the upload execution unit, the service providing unit, and the download execution unit, the first computer and the second computer execute the application development support program according to the eighth aspect of the invention, and whereby, the first computer and the second computer function as the application development support device of the first aspect, as a result, a development of an application program, which has a user interface capable of instructing uploading and downloading of a file and executes a previously designated service of the plural types of services when a file is download in response to an instruction, may be realized without performing a coding work.

The recording medium according to a ninth aspect of the invention is a recording medium at which an application development support program is stored, wherein the application development support program causes a computer to function as an application development support device that supports development of an application program including a first program by using a first tool which displays, at a display screen, a plurality of types of symbols which are capable of being used as components of a user interface screen, and generates the first program, which is for realizing a user interface using a computer when the user interface to be constructed is defined by at least executing a first operation for designing the user interface screen whereby a developer disposes a desired symbol of the plurality of types of symbols at a desired position in a screen, wherein: the application development support program causes a second computer to function as an upload execution unit that, if a file to be uploaded is transferred together with additional information during operation, registers the file to be uploaded and the additional information in a first storage unit in association with each other; the application development support program causes a first computer, at which at least the first tool operates, to function as a program addition unit that, when instructed to upload a given file via a symbol during operation, the symbol being a symbol for instructing uploading of a file and being disposed in a specific user interface screen by execution of the first operation with respect to the first tool by the developer, adds a program which causes a computer to execute a processing which transfers the file to be uploaded to the upload execution unit and which transfers service specifying information for specifying a service to the upload execution unit as the additional information, the service being designated by the developer when the first operation is executed and being executed when the file to be uploaded is downloaded; and the application development support program further causes the second computer to function as a service providing unit that executes a service provision processing which provides a service requested from a plurality of types of services during operation, and the application development support program further causes the second computer to function as a download execution unit that, when instructed to download a file during operation, reads the file to be downloaded from the first storage unit, and, if the service specifying information is registered in the first storage unit in association with the file to be downloaded, returns a response to a download instruction source after the download execution unit requests provision of the service specified by the service specifying information.

Since the recording medium according to the ninth aspect of the invention is recorded with an application development support program which causes a first computer at which at least a first tool operates to function as the program addition unit and causes a second computer which executes at least a first program to function as the upload execution unit, the service providing unit, and the download execution unit, the first computer and the second computer read the application development support program from the recording medium according to the invention described in the ninth aspect and execute the program, and whereby, the first computer and the second computer function as the application development support device described in the first aspect, as a result, a development of an application program having a user interface capable of instructing uploading and downloading of a file and executes a previously designated service of the plural types of services when a file is downloaded in response to an instruction may be realized without performing a coding work in a similar way of the first aspect of the invention.

### Advantageous Effects of Invention

As described above, the invention includes an upload execution unit that, if a file to be uploaded is transferred together with additional information, registers the file to be uploaded and the additional information in association with each other in a first storage unit during operation, a program addition unit that, when instructed by the developer via a symbol, which is disposed in a specific user interface screen to instruct uploading of a file, to upload a given file via the symbol during operation, adds a program which causes a computer to execute a processing which transfers a file to be uploaded to the upload execution unit and transfer service specifying information for specifying a service to be executed when a file to be uploaded, which is designated by a developer, is downloaded to the upload execution unit, a service providing unit that executes a service provision processing which provides a requested service from plural types of service during operation, and a download execution unit that, when instructed to download a file during operation, reads a file to be downloaded from a first storage unit, and, if service specifying information is registered in a first storage unit in association with the file, after requesting provision of a service specified by the service specifying information to the service providing unit, returns a response to a download instruction source, and the invention has advantageous effects in that the development of an application program, which has a user interface capable of instructing uploading and downloading of a file and executes a previously designated service from plural types of services when a file is downloaded in response to an instruction, may be realized without performing coding work.

### BRIEF DESCRIPTION OF THE DRAWINGS

FIG 1 is a block diagram showing a schematic configuration of a first computer system as a development environment of an application program in an exemplary embodiment.
FIG. 2A is an image view showing a creation screen of a web service creation tool.
Fig. 2B is an image view showing an example of a flow created on the creation screen using the tool, respectively.
FIG. 3 is an image view showing an example of a creation screen of a UI construction tool.
FIG. 4 is a flowchart showing contents of a call program modification processing.
FIG. 5 is a flowchart showing contents of a call processing.
FIG. 6A and Fig. 6B are image views showing an example of a file upload screen.
FIG. 7 is a block diagram showing a schematic configuration of a second computer system as an execution environment of an application program.
FIG. 8 is a conceptual view showing a flow of a processing when it is instructed to upload/download a file.
FIG. 9 is a flowchart showing contents of a file upload processing.
FIG. 10 is a flowchart showing contents of a file download processing.
FIG. 11 is a flowchart showing an example of contents of a right determination processing.
FIG. 12 is a flowchart showing another example of the contents of the right determination processing.

### BEST MODE FOR CARRYING OUT THE INVENTION

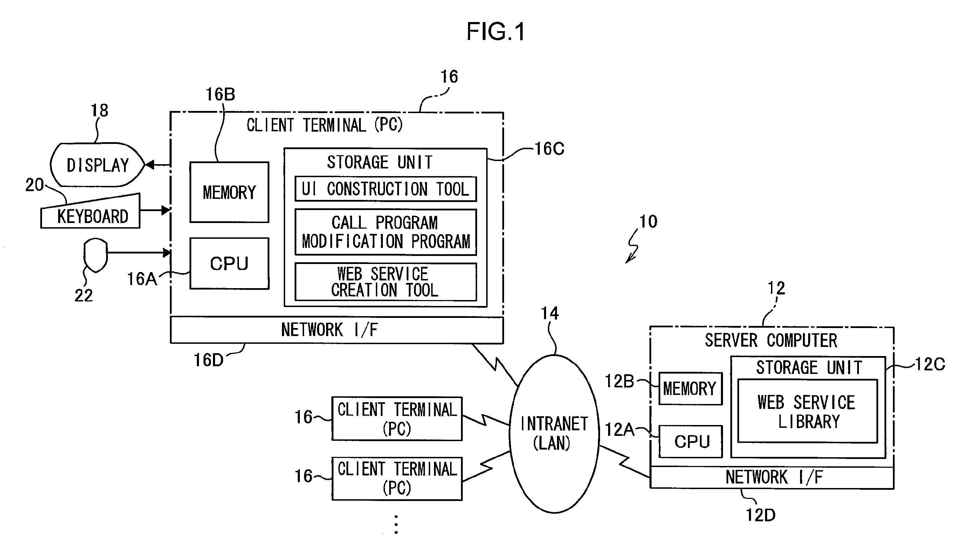

An example of an exemplary embodiment of the present invention will be explained below in detail referring to the drawings. FIG. 1 shows a first computer system 10 according to the exemplary embodiment. The first computer system 10 according to the exemplary embodiment is a computer system which is used when an application program is developed which provides a user who accessed to a predetermined website with a predetermined service (web service) and which is configured by connecting a server computer 12 to a lot of client terminals 16 via an intranet 14, respectively. Each client terminal 16 is a terminal operated by a developer who develops the application program, is composed of, for example, a personal computer (PC) and the like and includes a CPU 16A, a memory 16B composed of a RAM and the like, a storage unit 16C composed of a HDD (Hard Disk Drive) and the like, and a network interface (I/F) portion 16D. Each client terminal 16 is connected to a display 18 as a display unit, a keyboard 20 as an input unit, and a mouse 22, and connected to the intranet 14 via the network I/F portion 16D.

Further, the application program is roughly classified to a screen control program (a first program in the invention) for realizing a user interface (UI) portion in the predetermined website and to a web service providing program (a second program in the invention) for providing a user (for example, an employee of a specific enterprise) with a predetermined web service. The storage unit 16C of the client terminal 16 is installed with a program of a UI construction tool for developing the screen control program and a program of a web service creation tool for developing the web service providing program and is further installed with a call program modification program for performing a call program modification processing which is described later in the client terminal 16.

The client terminal 16 corresponds to a first computer of the eighth and ninth aspects, and the call program modification program corresponds to a program which causes the first computer to function as a program addition unit in an application development support program of the eighth and ninth aspects. When the CPU 16A executes the call program modification program, the client terminals 16 functions as the application development support device according to the invention together with an application server 34 and a web service providing server 36 of a website operation system 32 to be described later.

Note that the UI construction tool corresponds to a first tool according to the invention. Although a tool based on a standard of JSF (Java (Registered Trademark) Server Faces) is preferable as the UI construction tool, a tool based on other standard may be employed. Further, although a tool based on a standard of BPEL (Business Processing Execution Language) is preferable as the web service creation tool, a tool based on other standard may be employed.

On the other hand, the server computer 12 includes a CPU 12A, a memory 12B composed of a RAM, and the like, a storage unit 12C composed of a HDD and the like, and a network I/F portion 12D and is connected to the intranet 14 via the network I/F portion 12D. In the development of the web service providing program using the web service creation tool described above, although the program is developed using respective web services (for example, "a right determination web service" and the like to be described later) as a unit, the developed web service providing program may be also used to provide the same web service in other website. Therefore, the storage unit 12C of the server computer 12 stores a web service library for registering the developed web service providing program, and the web service providing program stored in the web service library may be used by plural developers who operate client terminals 16 different from each other, respectively.

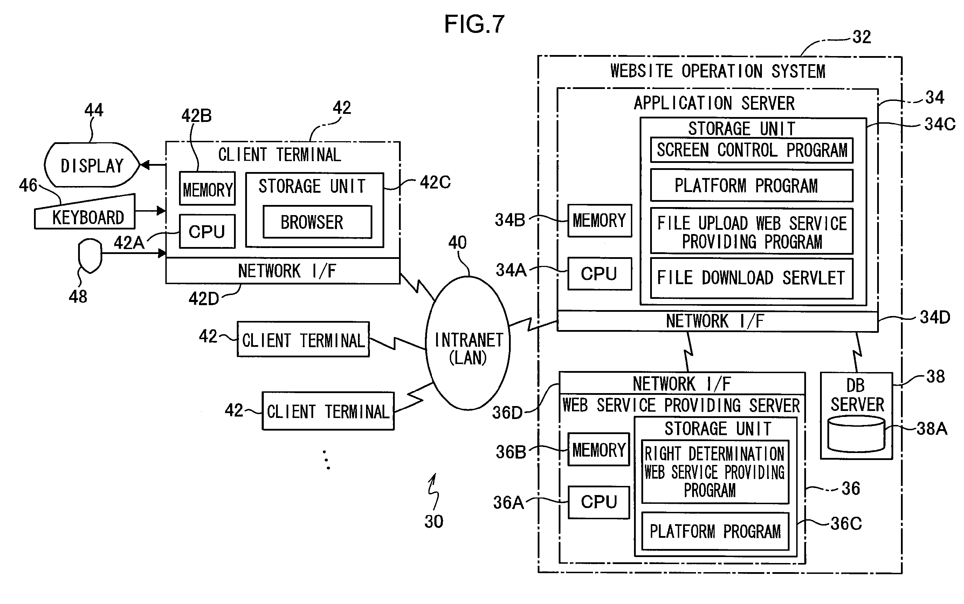

Next, a configuration of a second computer system 30 as an execution environment of an application program developed by the first computer system 10 will be explained referring to FIG. 7. The second computer system 30 includes a website operation system 32 for operating a specific website. The website operation system 32 is configured such that the website operation system 32 includes an application server 34, a web service providing server 36 and a DB (database) server 38 and a web service providing server 36 and a DB server 38 are connected to an application server 34 via a communication line, respectively.

The application server 34 includes a CPU 34A, a memory 34B composed a RAM and the like, a storage unit 34C composed of a HHD and the like, and a network I/F portion 34D, and the storage unit 34C is installed with the screen control program described above of the application program which is developed by using the first computer system 10 explained above and with a platform program which functions as a platform for executing the screen control program. When, for example, the UI construction tool is based on the standard of JSF, a platform providing program called a JSF engine is used as the platform program, and the screen control program created by the UI construction tool is executed on the platform (JSF engine). Further, the storage unit 34C is installed also with a file upload web service providing program for performing a file upload processing that is described below by the application server 34 and also with a file download servlet for performing a file download processing that is described below by the application server 34.

The network I/F portion 34D of the application server 34 is connected to a computer network (intranet) 40 to which a lot of web servers are connected mutually via the communication line. The intranet 40 is connected with a lot of client terminals 42 each of which includes a CPU 42A, a memory 42B composed of a RAM and the like, a storage unit 42C composed of a HDD and the like and a network I/F portion 42D and to each of which a display 44 as a display unit, a keyboard 46 as an input unit, and a mouse 48 are connected with a program of a browser (web browse software) installed to the storage unit 34C.

Further, the web service providing server 36 includes a CPU 36A, a memory 36B composed of a RAM and the like, a storage unit 36C composed of a HHD and the like, and a network I/F portion 36D. The HDD 36C is installed with a right determination web service providing program, which is one of the web service providing programs described above in the application program which is developed by using the first computer system 10 explained above and executes a right determination processing that is described below by the web service providing server 36, and with a platform program which functions as a platform for executing the right determination web service providing program. If, for example, the web service creation tool is based on the standard of BPEL, a program for providing a platform called a BPEL engine is used as the platform program, and the right determination web service providing program created by the web service creation tool is executed on the platform (BPEL engine).

Note that the application server 34 and the web service providing server 36 correspond to the second computer of the eighth, ninth aspects. The file upload web service providing program installed in the storage unit 34C of the application server 34 corresponds to a program, which causes the second computer to function as an upload execution unit according to the invention, of the application development support program of the eighth, ninth aspects, and the file download servlet corresponds to a program, which causes the second computer to function as a download execution unit (in more detail, a download execution unit of the second, fourth, sixth aspects) according to the invention, of the application development support program of the eighth, ninth aspects. Further, the right determination web service providing program installed in the storage unit 36C of the web service providing server 36 corresponds to a program, which causes the second computer to function as a service providing unit (in more detail, a service providing unit of the third aspect) according to the invention, of the application development support program of the eighth, ninth aspects.

The CPU 34A of the application server 34 executes the file upload web service providing program and the file download servlet and the CPU 36A of the web service providing server 36 executes the right determination web service providing program, thereby, the application server 34 and the web service providing server 36 function as the application development support device according to the invention together with the client terminals 16 explained above. Although the DB server 38 includes a storage unit 38A for storing a database, the storage unit 38A corresponds to a first storage unit according to the invention.

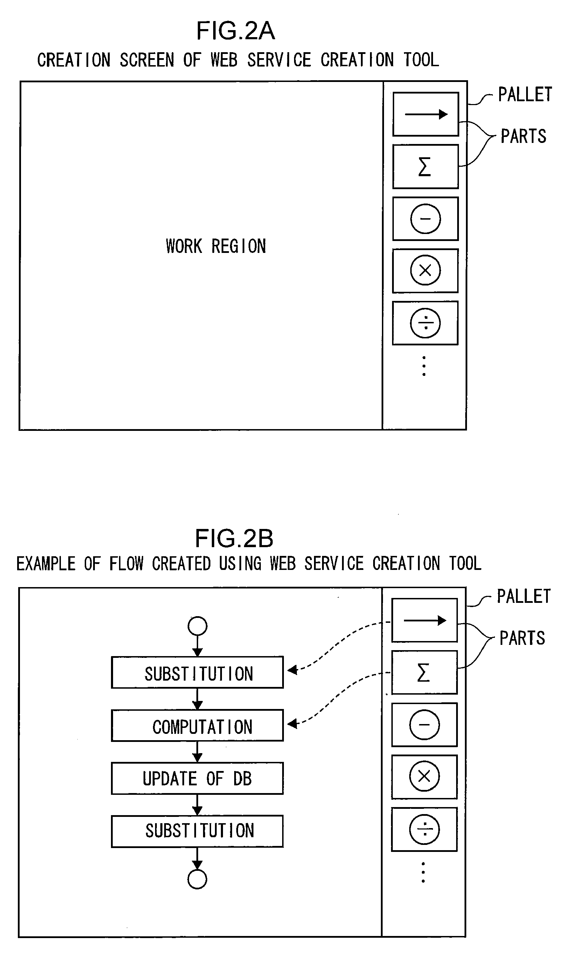

Next, as an operation of the exemplary embodiment, first, a development of a web service providing program (for example, the right determination web service providing program described above) executed using the web service creation tool will be explained. In order to develop the web service providing program, when the developer starts a program of the web service creation tool on a client terminal 16, a creation screen as shown in FIG. 2A) as an example is displayed on a display 18 of the client terminal 16. The web service creation tool is a tool having a function for, when a flowchart for defining a processing for realizing a web service to be provided is created by the developer, creating the web service providing program for executing the processing shown by the created flowchart. The creation screen shown in FIG. 2A includes a work region, in which the developer creates the flowchart, and a palette, in which plural types of parts (symbols) that may be used to create the flowchart and show processing different from each other, are shown.

When the creation screen is displayed, the developer selects a desired part from the plural parts displayed in the palette and disposes the part in the work area via the mouse 22 and the keyboard 20 and inputs information for defining contents of a processing shown by the disposed part when necessary and repeats an operation for defining a connection relation between the disposed part and parts already disposed in the work area (an execution sequence order of processing shown by the respective parts), thereby creating a flowchart defining a processing for realizing the web service to be provided as shown in FIG. 2B as an example. When creation of the flowchart is completed, the developer performs an operation for instructing creating of a program corresponding to the created flowchart. The respective parts displayed in the palette are added with programs for realizing the processing shown by the respective parts. When creating of the program is instructed, the web service creation tool executes a processing for correcting the programs added to the respective parts constituting the created flowchart based on the information defining contents of the processing input by the developer and rearranging the programs in response to the connection relation of the respective parts in the created flowchart, thereby creating a program (the web service providing program) for executing the processing shown by the created flowchart. As a result, the developer may obtain the web service providing program for providing a desired web service without performing a coding work.

When the web service providing program has been created by the web service creation tool as described above, the developer uploads the created web service providing program from the client terminal 16 to the server computer 12. The web service providing program, which is uploaded to the server computer 12, and variable definition information are registered in the web service library, and other developer may use the web service providing program and the variable definition program.

Note that, in the exemplary embodiment, the right determination web service providing program installed in the storage unit 36C of the web service providing server 36 is developed by the developer using the web service creation tool as described above.
However, the file upload web service providing program and the file download servlet, which are installed in the storage unit 34C of the application server 34, are previously developed as a standard function which may be used by the application program developed by the developer of the application program and provided to the developer of the application program. Accordingly, the developer of the application program may use the file upload web service providing program and the file download servlet without performing the coding work.

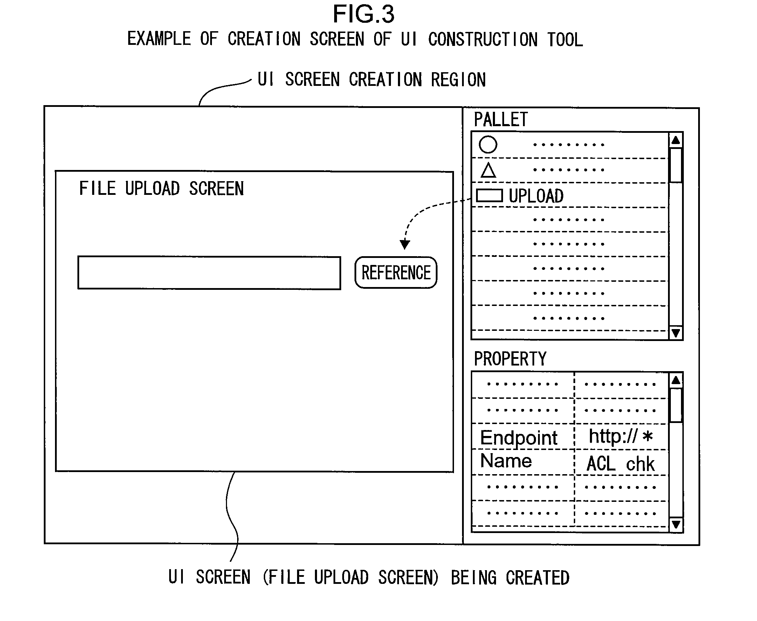

Next, a development of the screen control program which is executed using the UI construction tool will be explained. When the screen control program is developed using the UI construction tool, the developer first starts a program of the UI construction tool on the client terminal 16. Thus, a creation screen as shown in FIG. 3 as an example is shown on the display 18 of the client terminal 16. The UI construction tool is a tool having a function which causes the developer to perform an operation for constructing UI and creates the screen control program for realizing the constructed UI when the operation executed by the developer is completed. The creation screen shown in FIG 3 includes a UI screen creation area, in which the developer creates a UI screen (web page), a palette, in which an information input/display column that may be used as an element of the UI screen, and various types of components including buttons are displayed, and a property setting region, which sets various types of attribute information (properties) to the components disposed in the UI screen, respectively. Further, when the developer performs a predetermined operation, a screen transition definition region for defining a transition between plural UI screens created in the UI screen creation area is also displayed (illustration is omitted in FIG. 3).

When the creation screen is displayed on display 18 of the client terminal 16, the developer performs an operation for defining a UI to be constructed, thereby constructing the UI in a predetermined website which provides the web service (development of the screen control program). More specifically, the developer selects a desired component from the various types of components displayed in the palette and disposes the component at a desired position in the UI screen creation area via the mouse 22 and the keyboard 20, inputs text information to be displayed in the UI screen when necessary, and repeats an operation (first operation) for setting attribute information, thereby sequentially creating (designing) plural UI screens (web pages) constituting a predetermined website. When, for example, a file upload screen, which may instruct uploading of an given file, is created (designed), the developer performs an operation for selecting a file upload component (component described as "upload" in FIG. 3) from the various types of components displayed in the palette and disposing the select component at a desired position in the UI screen creation area. Thus, a file upload screen as shown in the UI screen creation area of FIG. 3 is created (designed).

Incidentally, the file whose uploading is instructed via the file upload screen is registered in (uploaded to) the storage unit 38A of the DB server 38 after the file is subjected to a processing that is described below and a URL (download URL) for downloading of the file is also set. However, a problem arises in that, in a case in which the download URL is leaked to a third party, even if the uploaded file is a confidential file, the file may be downloaded by the third party by inputting the download URL via a browser and the like by the third party who illegally obtained the download URL, and the like. Accordingly, if the file upload component disposed in the file upload screen is a component used to upload a confidential file, the developer performs an operation for starting the right determination web service to the file upload component disposed in the file upload screen when the file uploaded using the component is downloaded.

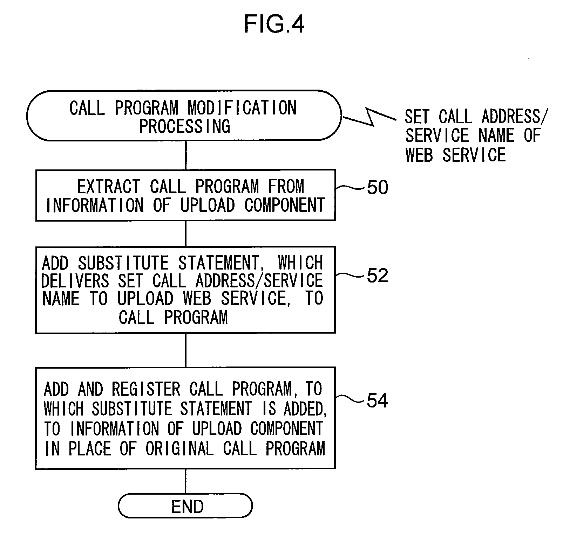

The operation is performed by executing an operation for displaying a property (attribute information) of the file upload component, which is disposed in the file upload screen, in a property set region and setting information, which designates a right determination web service to be started, of the displayed attribute information as to items (a web service call address (shown as "Endpoint" in FIG 3) and a service name (shown as "Name" in FIG. 3) for designating a web service to be started when the file uploaded using the component is downloaded. When the operation is performed by the developer, the call program modification program is started on the client terminal 16, and the started call program modification program is executed by the CPU 16A, thereby the call program modification processing shown in FIG. 4 is executed.

In the call program modification processing, first, at step 50, the information of the file upload component (component to which the item for designating the web service to be started in the download is set) disposed in the file upload screen is read from the memory 16B or the storage unit 16C. Here, a call program is added to the file upload component to call a file upload web service when the file to be uploaded is designated via the component and to cause the file upload web service to upload the file to be uploaded. At step 50, the call program is extracted from the information which is read from the memory 16B or the storage unit 16C and in which the call program is included.

At next step 52, a substitute statement (program) is added to the call program extracted at step 50 to deliver the web service call address and the service name (in the exemplary embodiment, the call address and the service name of the right determination web service), which are set via the property set region, to the upload web service. Note that the web service call address and the service name correspond to service specifying information according to the invention, and the web service call address corresponds to end point information of the sixth aspect, and the service name corresponds to a service name of the sixth aspect, respectively. At step 54, the call program added to the file upload component disposed in the file upload screen is updated and the processing is completed by adding the call program, to which the substitute statement is added at step 52, to the information of the file upload component in place of the original call program and rewriting the file upload component information to the memory 16B or to the storage unit 16C.

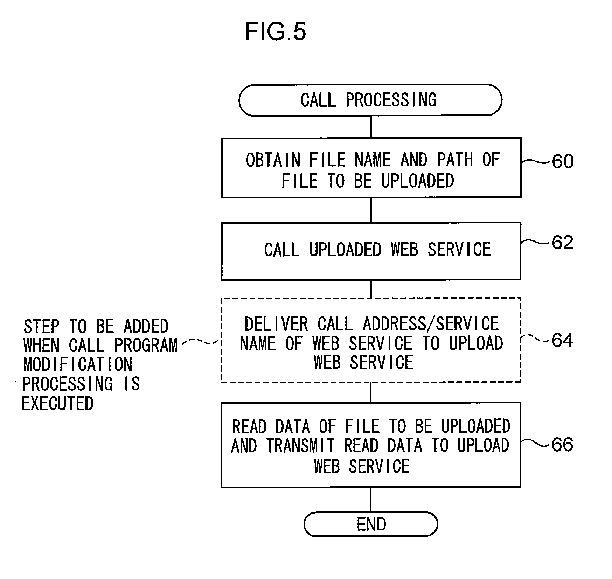

The call program added to file upload component is executed by the CPU 42A of the client terminal 42 when the file to be uploaded is designated via the file upload component disposed in the screen in the state that the file upload screen is displayed on the display 44 of the client terminal 42 during operation. As shown by solid lines shown in FIG. 5, a call processing is executed which is composed of a processing of obtaining a file name and a path (a director of a holder in which the file to be uploaded is stored) of the file to be uploaded (step 60), a processing of calling the file upload web service (step 62), and a processing of reading the data of the file to be uploaded from the storage unit 42C based on the file name and the path obtained previously and transferring the data to the file upload web service (step 66). However, when the call program modification processing described above is executed, a processing of delivering the web service call address and the service name (in the exemplary embodiment, the call address and the service name of the right determination web service) to the file upload web service is also executed as the call processing (step 64).

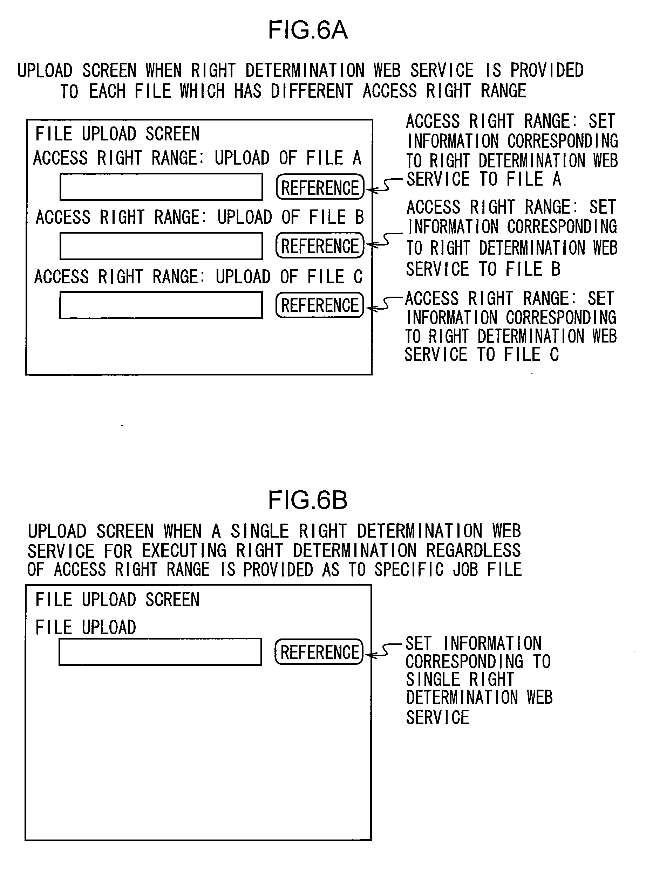

Note that the number of the file upload components, which are disposed in the file upload screen, and the web service call addresses and the service names, which are set to respective components, are different also depending on a function provided with a web service to be started. For example, if there is a possibility that files (as an example, a file, to which any of an access right ranges of A: an executive officer and higher level, an access right range B: a manager and higher level, an access right range C: a supervisor and higher level is set, as the access right range) whose access right ranges are different from each other exist in a specific website operated by the website operation system 32, any of the files having the different access right ranges is uploaded via the file upload screen, and the right determination web services are provided with the files having different access right ranges (if respective right determination web services are configured to determine an access right only as to a file of a single access right range), in order to allow a file having a different access right range to be uploaded via a different component as shown in FIG. 6A as an example, the file upload components as many as the number of types of the access right ranges are disposed in the file upload screen and the call addresses and the service names of the right determination web services, which correspond to the access right ranges of the files uploaded via the respective components, are disposed to the respective components.

In the other hand, if a single right determination web service, which has a function which determines an access right range of a file and determines an access right based on the determined access right range of the file, is disposed as the right determination web service (if the right determination web service is configured to determine an access right regardless of an access right range set to a file), since the files having the different access right ranges may be uploaded via the same component as shown in FIG. 6B as an example, only one file upload component is disposed in the file upload screen and the call address and the service name of the single right determination web service are set to the component.

Further, when the creation of all the UI screens (web pages) constituting a website is completed by executing the first operation described above, the developer performs an operation which defines transitions of the respective created UI screens in the screen transition definition region, and the like, and when the operation for defining the UI is completed via these operation, the developer instructs the UI construction tool to create a program for realizing the UI. In response to the instruction, the UI construction tool creates the screen control program which realizes the UI constructed by the developer (which causes the display 44 of the client terminal 42 to sequentially display the respective UI screens in response to a request from the client terminal 42 (refer to FIG. 7)). The screen control program is configured to include data which defines the respective UI screens and a program which defines a processing when various types of operations are executed by the user via the respective UI screens. As to the file upload screen in which the file upload component is disposed and the call address and the service name of the web service to be started are set to the component, a call program added to the file upload component is read, and the read call program is used as a program which defines a processing if the file to be uploaded is designated by the user via the file upload component (the call program is assembled to the screen control program as a program embedded in the file upload screen).

The application program including the screen control program and the web service providing program has been developed by the above operations and processing. As described above, in the exemplary embodiment, the web service providing program may be developed without executing the coding work by using the web service creation tool. Further, as to the screen control program, the file upload screen is included in the UI to be constructed, and when it is desired to start a desired web service such as the right determination web service and the like at the time of downloading the file uploaded via the screen, the UI may be constructed without executing the coding work by simple operations of disposing the file upload component in the file upload screen being created, displaying the property of the disposed file upload component, and setting the call address and the service name of the desired web service. Accordingly, the application program including the screen control program and the web service providing program may be developed in a very short period.

Next, an operation when the application program is executed (when the website is operated) will be explained. When the application program is executed, the screen control program of the developed application program is installed in the storage unit 34C of the application server 34, and the right determination web service providing program is installed in the storage unit 36C of the web service providing server 36 as shown in FIG. 7. Further, the file upload web service providing program and the file download servlet, which are developed and provided as the standard function which may be used by the program, are installed in the storage unit 34C of the application server 34.

Each time a user, who is confirmed to be an authorized user by a predetermined login processing (for example, an authentication processing using a user ID and a password, and the like) requests to deliver the UI screen via the client terminal 42, the screen control program, which is executed on the application server 34 (in detail, on the platform provided by the platform program) causes the UI screen whose delivery is requested to display on the display 44 of the client terminal 42 of a request source by transmitting the data of the UI screen to the client terminal 42 of the request source.

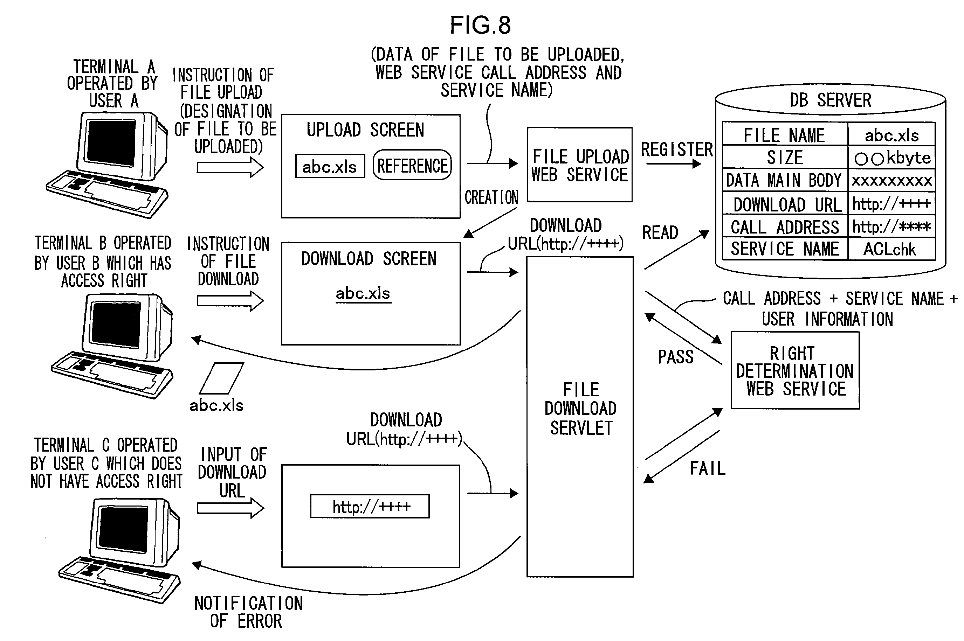

Here, files, which are stored in the storage unit 42C of the client terminal 42, are displayed by selecting a button shown as "reference" of the upload component disposed in the file upload screen in the state that the file upload screen delivered in response to a delivery request from the user is displayed on the display 44 of the client terminal 42, an operation which selects a desired file of the displayed files as a file to be uploaded is executed by the user, and thereby an upload of the selected file is instructed (refer also to "file upload instruction" of FIG. 8), the call program is executed by the CPU 42A of the client terminal 42, thereby the call processing described above (FIG. 5) is executed by the client terminal 42.

Note that, in the operation for instructing uploading of the file, if a file download screen is a screen in which only one file upload component is disposed as shown in FIG. 6B, the uploading of the file is instructed via the component. However, if the plural file upload components are disposed on the file download screen as shown in FIG. 6A, the uploading of the file is instructed via any one component (for example, via a component disposed to upload a file in the same the access right range as the file to be uploaded), which corresponds to the file to be uploaded, of the plural components.

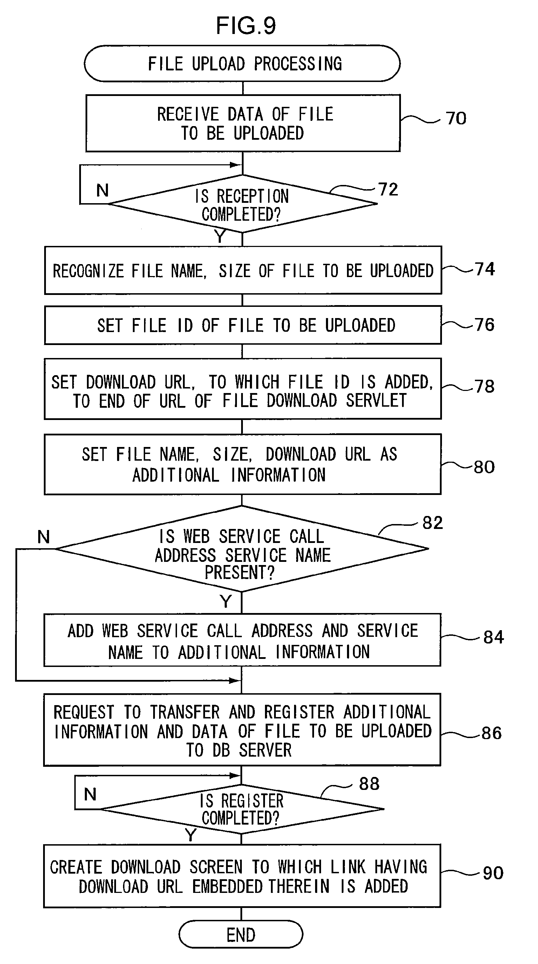

Further, since the call processing described above includes a step (step 62) of calling the file upload web service, the file upload web service providing program is executed by the CPU 34A of the application server 34 by executing the step, a file upload processing shown in FIG 9 is executed by the application server 34.

In the file upload processing, first, at step 70, a predetermined amount of the data of the file to be uploaded, which is transmitted from the client terminal 42 of a call source is received, and, at next step 72, whether or not the data from the client terminal 42 has been received is determined. If the determination is NO, the processing returns to step 70, and steps 70, 72 are repeated until the determination at step 72 is YES. Note that if the web service call address and the service name are transmitted from the client terminal 42 of the call source, the information are also received at steps 70, 72.

When the data has been received from the client terminal 42 of the call source, the determination at step 72 becomes YES and the processing goes to step 74 and the file name and the size of the file to be uploaded are recognized referring to the data of the received file to be uploaded. Further, at step 76, a file ID of the file to be uploaded is set using a hash function and the like, and at next step 78, the file ID set at step 76 is added to the end of a call address (URL) of the file download servlet, thereby a download URL is set to the file to be uploaded to designate the file when the file is downloaded. Further, at step 78, the file ID set at step 76 is added also to the end of the file name recognized at step 74.

At next step 80, the file name of the file to be uploaded to the end of which the file ID is added at step 78, the size of the file to be uploaded which is recognized at step 74, and the download URL, which is set at step 78, are set to a predetermined region on the memory 34B as additional information when the data of the file to be uploaded is transferred (uploaded) to the DB server 38. At step 82, whether or not the web service call address and the service name are included in the information received from the client terminal 42 of the call source is determined. If the determination is NO, the processing goes to step 86. If the determination is YES, the processing goes to step 84 and the web service call address and the service name are added to the additional information when the data of the file to be uploaded is transferred (uploaded) to the DB server 38 by additionally setting the web service call address and the service name included in the information received from the client terminal 42 of the call source to the predetermined region on the memory 34B, and then the processing goes to step 86.

At next step 86, the additional information set in the above processing and the data of the file to be uploaded are transferred to the DB server 38, and a registration (upload) of the additional information and the data of the file to be uploaded in (the DB stored in) the storage unit 38A is requested (refer also to "register" of FIG. 8). At step 88, it is determined whether or not it is notified from the DB server 38 that the information transferred to the DB server 38 has been registered in the storage unit 38A, and step 88 is repeated until the determination is YES. When the DB server 38 is requested to upload (to register) a file from (the file upload web service operating on) the application server 34, the DB server 38 uploads (registers) the data of the file to be uploaded to (the DB stored in) the storage unit 38A in association with the additional information received at the same time. Thus, the data main body of the file to be uploaded is registered in the storage unit 3 8A in association with the respective information of the file name, the size, and the download URL as shown in FIG. 8 as an example. Further, if the call address and the service name of the web service are included in the additional information received from the application server 34, the call address and the service name are also registered in the storage unit 38A in association with the data main body of the file to be uploaded as shown in FIG. 8 as an example.

When the information has been registered in the storage unit 38A, the DB server 38 notifies the application server 34 that the registration has been completed. As a result, the determination at step 88 is YES, and the processing goes to step 90 and a download screen for downloading of the file uploaded this time is created using the download URL set at above step 78 (refer also to "create" of FIG. 8), a processing for additionally registering the created download screen as one of the UI screens to be delivered by the screen control program is executed, and then, the file upload processing is completed. Note that it is sufficient that the file download screen is a screen to which a link, in which the download URL is embedded, is disposed as shown also in FIG. 8 as an example. However, the invention is not limited to this, and the file download screen may be a screen to which plural links, in which the download URLs corresponding to the respective files uploaded until now, are embedded, respectively. Note that step 90 corresponds to a screen creation unit of the fifth aspect.

Further, when a user of a specific website, who finished a predetermined login processing, desires to browse and update a specific file uploaded by the file upload processing, the user requests to deliver the file download screen created by the file upload processing, a downloading of the specific file is instructed (refer also to "file download instruction" shown in FIG. 8) by executing an operation which selects the link disposed in the file download screen in the state that the file download screen, which is delivered by the screen control program in response to the request, is displayed on the display 44 of the client terminal 42 operated by the user.

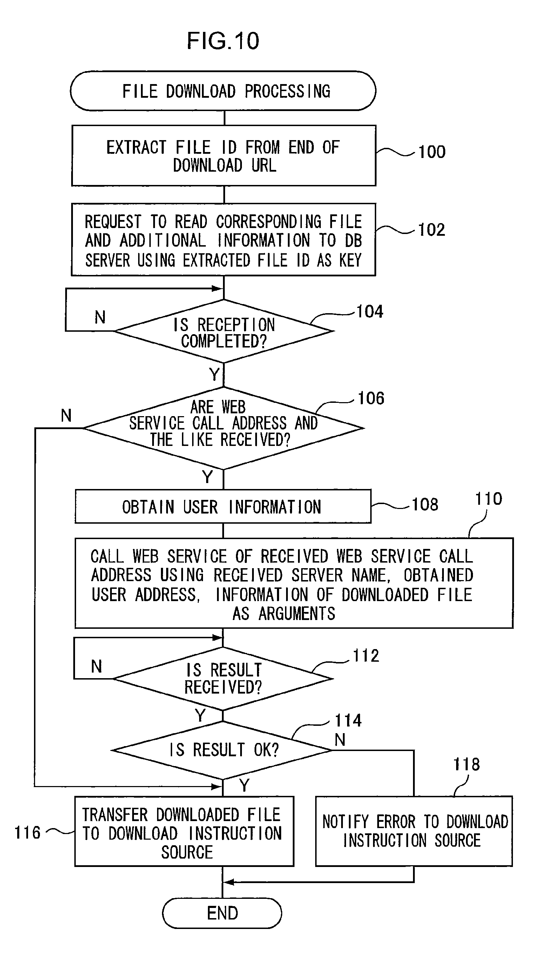

Thus, the download URL embedded in the selected link is transmitted from the client terminal 42 to the application server 34 (refer also to "download URL (http://++++)" shown in FIG. 8). As described above, since the download URL is configured by adding the file ID to the end of the call address (URL) of the file download servlet, the file download processing shown in FIG. 10 is executed in the application server 34 which received the download URL by starting the file download servlet.

In the file download processing, first, at step 100, the download URL, which is received by the application server 34 from client terminal 42, is obtained, and a file ID is extracted from the end of the obtained download URL. Further, at step 102, the file ID extracted at step 100 is notified to the DB server 38, and the DB server 38 is requested to read a file and additional information corresponding to the notified file ID from the storage unit 38A (refer also to "read" shown in FIG. 8). Thus, the DB server 38 searches a file name to the end of which a file ID notified from the application server 34 is added using the file ID as a key, reads the data main body of a file, which is registered in association with the file name extracted by the search, and the additional information from the storage unit 38A, and then sequentially transmits the read information to (the file download servlet) of the application server 34.

At next step 104, it is determined whether or not the information has been received from the DB server 38, and step 104 is repeated until the determination is YES. When the information has been received from the DB server 38, the determination at step 104 is YES and the processing goes to step 106 and whether or not a web service call address and a service name are included in the information received from the DB server 3 8 is determined.
If the determination is NO, it may be determined that an execution of a specific web service is not requested to the file to be downloaded this time when the file is downloaded, thus, the processing goes to step 116 and the data of the file received from the DB server 38 is transferred to the client terminal 42 operated by the user who has instructed downloading the file (which realizes the downloading of the file from the DB server 38 to the client terminal 42), thereby the file download processing is completed.

On the other hand, if the web service call address and the service name are included in the information received from the DB server 38, it may be determined that the file to be downloaded of this time is requested to execute the web service specified by the web service call address and the service name when the file is downloaded, and thus, if the determination at step 106 is YES, the processing goes to step 108 and the user information of the user stored in the memory 34B of the application server 34 and the like is obtained when a login processing, in which the user has instructed the downloading logs in a specific website, is executed. Note that the user information includes information, for example, a user ID and a user name, a belonging department, a post (a level of job), a belonging company name, and the like and corresponds to a user specifying information of the third aspect.

At next step 110, a web service of a call address included in the information received from the DB server 38 is called using the service name included in the information received from the DB server 38, the user information obtained at step 108, and information (for example, file ID and the like) for identifying a downloaded file as arguments, thereby requesting a corresponding web service providing program to provide a web service corresponding to the service name included in the arguments (refer also to "call address + service name + user information" shown in FIG. 8). Thus, since the corresponding web service providing program is executed by the application server 34 or the web service providing server 36, a processing which provides the requested web service is executed.

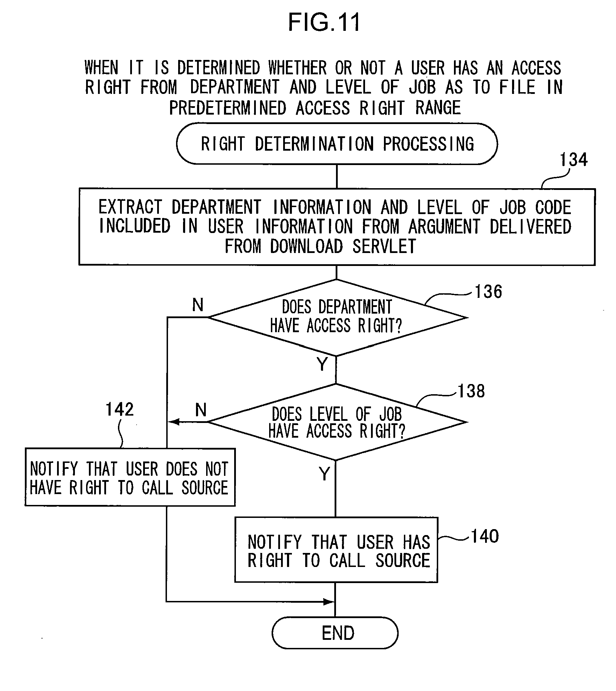

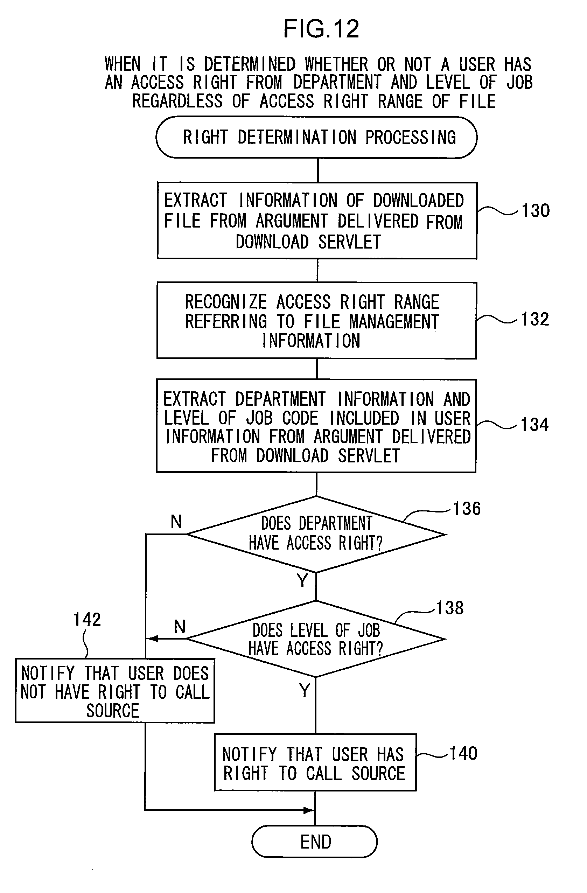

If, for example, the web service providing program corresponding to a web service call address is the right determination web service providing program and the program is configured so as to be executed on the platform provided by the platform program installed in the web service providing server 36, a right determination processing shown in FIG. 11 or FIG 12 is executed by executing the right determination web service providing program by the web service providing server 36.

FIG. 11 shows an example of the right determination processing executed by respective right determination web services when the respective right determination web services are disposed to the files having different access right ranges and configured to determine an access right only as to only a file in a single access right range. In the right determination processing shown in FIG. 11, first, at step 134, department information representing the belonging department and a level of job code representing the level of job, which are included in the user information, are extracted from the arguments delivered from (the download servlet) of the application server 34. At step 136, whether or not the belonging department of the user represented by the department information extracted at step 134 is a department having the access right in a corresponding access right range is determined. If the determination is YES, the processing goes to step 138 and whether or not the level of job of the user represented by the level of job code extracted at step 134 is a level of job having the access right in the corresponding access right range.

If all of the determinations at steps 136, 138 are YES, since it may be determined that the user, who has instructed the downloading, is a user having the access right in the corresponding access right range (a user who has the access right as to the file to be downloaded), it is notified to the call source (the download servlet of) the application server 34 in the case) at step 140 that the user has the access right, thereby completing the processing. Further, if the determination at step 136 or step 138 is NO, since it may be determined that the user, who has instructed the downloading, is a user having no access right in the corresponding access right range (a user who does not have an access right as to the file to be downloaded, it is notified to the call source at step 142 that the user does not have an access right, thereby completing the processing.

On the other hand, FIG 12 shows an example of the right determination processing executed by the right determination web service if a single right determination web service, which may determine the access right regardless of the access right range set to a file. In the right determination processing shown in FIG. 12, first, at step 130, information such as the file ID for identifying a downloaded file are extracted from the arguments delivered from (the download servlet of) the application server 34.

Further, at step 132, the access right range set to the downloaded file is recognized based on the information extracted at step 130. The recognition of the access right range may be realized by, for example, storing file management information which manages the access right range, which is set to each file, to the each file in the storage unit 38A of the DB server 38, notifying the information extracted at step 130 to the DB server 38, and executing a processing for requesting to read corresponding access right information. Note that since the following processing is the same as the right determination processing shown in FIG. 11 except that determinations at step 136, 138 are executed based on the access right range recognized at step 132, explanation of the processing is omitted.

Note that the right determination processing (the right determination web service) shown in FIGS. 11, 12 is only an example, and, for example, a processing which determines presence or absence of the access right based on any one of the level of job, the belonging department, and the belonging company of the user information, and a processing which determines that the access right is not permitted to a user other than a creator of a file by determining whether or not the user who instructed the downloading is the creator of the file, may be executed.

In the file download processing (FIG. 10), when a web service is called at step 110, whether or not a result of processing is received from the web service called at step 110 is determined at next step 112, and step 112 is repeated until the determination is YES. When the result of processing is received from the web service, the determination step 112 becomes YES and the processing goes to step 114, and whether or not the received result of processing is OK (pass) is determined (if, for example, the called web service is the right determination the service, the notified result of processing indicates that the access right is permitted). If the determination at step 114 is YES, the processing goes to step 116 described above and the data of the file received from the DB server 38 is transferred to the client terminal 42 operated by the user who instructed downloading of the file, thereby completing the processing. Further, if the determination is NO at step 114, the processing goes to step 118 and an error is notified to the client terminal 42 operated by the user who instructed downloading of the file, thereby completing the operation.

If the access right range is set to a file stored in the storage unit 38A of the DB server 38 so that the file may be downloaded, prohibition of a downloading of the file executed by a user who is not within the access right range may be realized in principle by, for example, configuring the file download screen via which the downloading of the file is instructed so that the file download screen is delivered only to the client terminal 42 operated by the user who has the access right to the file. However, the configuration has a problem in that if the download URL, which is embedded to a link disposed to the file download screen, is leaked to a user who does not have the access right to a corresponding file, the file, to which the user does not have the access right, may be downloaded by the user by the user executing an operation for inputting the download URL known by the user to an address input column of a browser, and the like.

To the contrast, in the exemplary embodiment, as to a file which is uploaded via the file upload component, to which the web service call address and the service name are set, when the file is disposed in the file upload screen, the web service call address and the service name are stored in the storage unit 38A of the DB server 38 in association with the data main body the file, and, when a downloading of the file is instructed, after the data of the file is read from the storage unit 38A, a corresponding web service is executed based on the web service call address and the service name stored in the storage unit 38A, and thus, when the downloading of the file is instructed, the right determination web service is executed by setting information corresponding to the right determination web service as the web service call address and the service name.

Accordingly, even if a downloading of the file is instructed by the user who does not have the access right by inputting the download URL by the user, "the access right is not permitted (the user does not have the access right)" is notified from the right determination web service as a result of processing based on the user information obtained by the user when the user has executed a login processing for logging in a specific website (refer also to "NG" ("FAIL") shown in FIG. 8), and an error is notified from (the download servlet of) the application server 34 to the client terminal 42 operated by the user (refer also to "error notification" shown in FIG. 8), as a result, the file may be prevented from being downloaded by the user who does not have the access right.

Further, in the exemplary embodiment, since the web service, which is executed when a downloading of a file is instructed, is designated by the web service call address and the service name, the file upload processing executed by the file upload web service providing program and the file download processing executed by the file download servlet are realized by a predetermined processing regardless of executing any of the web services when the downloading of the file is instructed. Using this processing, the exemplary embodiment develops and provides the file upload web service providing program and the file download servlet as a standard function, which may be used by the application program, and thus it is not necessary for the developer to develop the application program which executes the file upload processing and the file download processing. Therefore, according to the exemplary embodiment, a burden imposed on the developer may be greatly reduced together with that a construction of the UI for starting the web service such as the right determination web service when a file, which includes a file upload screen and is uploaded via the screen, is downloaded, may be realized without executing the coding work as explained above.

Note that the right determination web service is explained as an example of the service provided by the service providing unit according to the invention. However, the invention is not limited to this and may be applied to any given service, for example, a service which counts the number of times of downloading in a unit of file or in a unit of user.
Further, the right determination web service and other service may be selectively executed, when instructed to download a file, the plural services may be sequentially executed, and when instructed to download a file, first, a first service may be executed and a second service may be executed according to a result of the first service.

Further, the file upload web service providing program which realizes the upload execution unit according to the invention and the aspects, in which the file download servlet which realizes the download execution unit is executed by the application server 34 and the right determination web service providing program which realizes the service providing unit according to the invention is executed by the web service providing server 36, are explained above. However, the invention is not limited to this and it may be possible to configure the invention so that the respective programs are executed by a single computer.

Further, the aspect, in which a predetermined web service is provided to a user (for example, an employee of a specific company) who accesses the website (application server 34) via the intranet 40, is explained above. However, the invention is not limited to this and may be applied to an aspect in which the predetermined web service is provided to an unspecified user who uses the Internet in place of the intranet 40 and who may connect to the Internet, and the like.

Further, explained above is the aspect in which, in the respective programs corresponding to the application development support program according to the invention, the call program modification program is previously stored (installed) in the storage unit 16C of the client terminal 16, the file upload web service providing program and the file download servlet are previously stored (installed) in the storage unit 34C of the application server 34, the right determination web service providing program is previously stored (installed) in the storage unit 36C of the web service providing server 36. However, the application development support program according to the invention may be provided in an embodiment in which the application development support program is stored at a recording medium such as a CD-ROM and a DVD-ROM. The recording medium in the aspect corresponds to a recording medium of a tenth aspect.

### REFERENCE NUMERALS

- 10: computer system
- 16: client terminal
- 30: computer system
- 34: application server
- 36: web service providing server
- 38: DB server
- 38: storage medium
- 38: storage unit
- 42: client terminal

## Claims

1. An application development support device that supports development of an application program including a first program by using a first tool which displays, at a display screen, a plurality of types of symbols which are capable of being used as components of a user interface screen, and generates the first program, which is for realizing a user interface using a computer when the user interface to be constructed is defined by at least executing a first operation for designing the user interface screen whereby a developer disposes a desired symbol of the plurality of types of symbols at a desired position in a screen, the application development support device comprising:
an upload execution unit that, if a file to be uploaded is transferred together with additional information during operation, registers the file to be uploaded and the additional information in a first storage unit in association with each other;
a program addition unit that, when instructed to upload a given file via a symbol during operation, the symbol being a symbol for instructing uploading of a file and being disposed in a specific user interface screen by execution of the first operation with respect to the first tool by the developer, adds a program which causes a computer to execute a processing which transfers the file to be uploaded to the upload execution unit and which transfers service specifying information for specifying a service to the upload execution unit as the additional information, the service being designated by the developer when the first operation is executed and being executed when the file to be uploaded is downloaded;
a service providing unit that executes a service provision processing which provides a service requested from a plurality of types of services during operation; and
a download execution unit that, when instructed to download a file during operation, reads the file to be downloaded from the first storage unit, and, if the service specifying information is registered in the first storage unit in association with the file to be downloaded, returns a response to a download instruction source after the download execution unit requests provision of the service specified by the service specifying information.

2. The application development support device of claim 1, wherein, after the service providing unit completes the service provision processing, the download execution unit selectively transfers the file to be downloaded that is read from the first storage unit to the download instruction source according to a result of processing of the service provision processing.

3. The application development support device of claim 1, wherein the service providing unit provides a right determination service which, when user specifying information for specifying a user who has instructed at least downloading of the file is transferred from a service request source, determines whether or not the user has a right for accessing the file based on at least the transferred user specifying information and notifies a result of determination to the service request source.

4. The application development support device of claim 3, wherein the download execution unit transfers at least the user specifying information and requests the service providing unit to provide the right determination service; if the result of determination notified from the service providing unit is that the user has a right, the download execution unit transfers the file to be downloaded that is read from the first storage unit to the download instruction source; and, if the result of determination notified from the service providing unit is that the user does not have a right, the download execution unit returns an error response to the download instruction source.

5. The application development support device of any one of claim 1 to claim 4, further comprising a screen creation unit that, if the file and the additional information are registered in the first storage unit by the upload execution unit, additionally creates a user interface screen for downloading which includes a link, in which information for calling the download execution unit and instructing downloading of the file is embedded, as one screen constituting the user interface.

6. The application development support device of any one of claim 1 to claim 5, wherein:
the service specifying information includes end point information for calling the service providing unit, which is capable of providing a service to be executed when the file to be uploaded is downloaded, and includes a service name of the service to be executed; and
the download execution unit requests the service providing unit to provide the service specified by the service specifying information by calling the service providing unit according to the end point information included in the service specifying information and delivering the service name included in the service specifying information to the called service providing unit as an argument.

7. The application development support device of any one of claim 1 to claim 6, wherein the first tool is based on JSF.

8. An application development support program for causing a computer to function as an application development support device that supports development of an application program including a first program by using a first tool which displays, at a display screen, a plurality of types of symbols which are capable of being used as components of a user interface screen, and generates the first program, which is for realizing a user interface using a computer when the user interface to be constructed is defined by at least executing a first operation for designing the user interface screen whereby a developer disposes a desired symbol of the plurality of types of symbols at a desired position in a screen, wherein:
the application development support program causes a second computer to function as an upload execution unit that, if a file to be uploaded is transferred together with additional information during operation, registers the file to be uploaded and the additional information in a first storage unit in association with each other;
the application development support program causes a first computer, at which at least the first tool operates, to function as a program addition unit that, when instructed to upload a given file via a symbol during operation, the symbol being a symbol for instructing uploading of a file and being disposed in a specific user interface screen by execution of the first operation with respect to the first tool by the developer, adds a program which causes a computer to execute a processing which transfers the file to be uploaded to the upload execution unit and which transfers service specifying information for specifying a service to the upload execution unit as the additional information, the service being designated by the developer when the first operation is executed and being executed when the file to be uploaded is downloaded; and
the application development support program further causes the second computer to function as a service providing unit that executes a service provision processing which provides a service requested from a plurality of types of services during operation, and
the application development support program further causes the second computer to function as a download execution unit that, when instructed to download a file during operation, reads the file to be downloaded from the first storage unit, and, if the service specifying information is registered in the first storage unit in association with the file to be downloaded, returns a response to a download instruction source after the download execution unit requests provision of the service specified by the service specifying information.

9. A recording medium at which an application development support program is stored, wherein the application development support program causes a computer to function as an application development support device that supports development of an application program including a first program by using a first tool which displays, at a display screen, a plurality of types of symbols which are capable of being used as components of a user interface screen, and generates the first program, which is for realizing a user interface using a computer when the user interface to be constructed is defined by at least executing a first operation for designing the user interface screen whereby a developer disposes a desired symbol of the plurality of types of symbols at a desired position in a screen, wherein:
the application development support program causes a second computer to function as an upload execution unit that, if a file to be uploaded is transferred together with additional information during operation, registers the file to be uploaded and the additional information in a first storage unit in association with each other;
the application development support program causes a first computer, at which at least the first tool operates, to function as a program addition unit that, when instructed to upload a given file via a symbol during operation, the symbol being a symbol for instructing uploading of a file and being disposed in a specific user interface screen by execution of the first operation with respect to the first tool by the developer, adds a program which causes a computer to execute a processing which transfers the file to be uploaded to the upload execution unit and which transfers service specifying information for specifying a service to the upload execution unit as the additional information, the service being designated by the developer when the first operation is executed and being executed when the file to be uploaded is downloaded; and
the application development support program further causes the second computer to function as a service providing unit that executes a service provision processing which provides a service requested from a plurality of types of services during operation, and
the application development support program further causes the second computer to function as a download execution unit that, when instructed to download a file during operation, reads the file to be downloaded from the first storage unit, and, if the service specifying information is registered in the first storage unit in association with the file to be downloaded, returns a response to a download instruction source after the download execution unit requests provision of the service specified by the service specifying information.
